# EUROPÄISCHE PATENTSCHRIFT

(11) **EP 3 212 907 B1**
(45) Veröffentlichungstag und Bekanntmachung des Hinweises auf die Patenterteilung: **25.07.2018**
(21) Anmeldenummer: 15784401.0
(22) Anmeldetag: 23.10.2015
(51) Int. Cl.: F01N 3/20, F01N 3/027

(54) **WABENKÖRPER MIT ELEKTRISCHER HEIZVORRICHTUNG**
HONEYCOMB BODY WITH AN ELECTRIC HEATING DEVICE
CORPS EN NID-D'ABEILLES À DISPOSITIF DE CHAUFFE ÉLECTRIQUE

(30) Priorität: 31.10.2014 DE 102014115923
(43) Veröffentlichungstag der Anmeldung: 06.09.2017
(73) Patentinhaber: Continental Automotive GmbH, 30165 Hannover (DE)
(72) Erfinder: HIRTH, Peter, 51503 Rösrath (DE); HÄRIG, Thomas, 53819 Neunkirchen-Seelscheid (DE); LIMBECK, Sigrid, 53804 Much (DE)
(86) Internationale Anmeldenummer: PCT/EP2015/074639
(87) Internationale Veröffentlichungsnummer: WO 2016/066551

(56) Entgegenhaltungen:
- DE-A1-102013 222 490
- US-A- 4 548 625
- US-A1- 2006 177 358

## Beschreibung

Die vorliegende Erfindung betrifft eine Wabenkörperanordnung mit einer elektrischen Heizvorrichtung. Derartige Wabenkörperanordnungen werden insbesondere in Abgasnachbehandlungsanlagen von Kraftfahrzeugen eingesetzt, insbesondere um dort ein gezieltes Temperaturmanagement zu realisieren.

Um die Emission von Schadstoffen von Verbrennungskraftmaschinen, insbesondere in Kraftfahrzeugen, zu begrenzen, werden seit langem katalytische Konverter und/oder Partikelfilter oder dergleichen zum Reinigen des Abgases eingesetzt. Damit eine katalytisch unterstützte Umwandlung der Schadstoffe stattfindet, muss das Abgas und/oder der katalytische Konverter bzw. der Partikelfilter eine vorgegebene Mindesttemperatur aufweisen. Insbesondere nach einem Kaltstart oder Neustart der Verbrennungskraftmaschine ist eine solche Mindesttemperatur oft noch nicht erreicht. Es wird daher versucht, die Temperatur des Abgases und/oder des katalytischen Konverters bzw. Partikelfilters durch elektrisch betriebene Heizelemente zu erhöhen.

So geht beispielsweise aus der EP-B1-0783621 ein elektrisch beheizbarer Katalysator hervor, der mit zwei Wabenkörpern ausgebildet ist. Der erste Wabenkörper ist dabei an eine elektrische Spannungsquelle angeschlossen und kann mit Strom durchflossen werden. Aufgrund der ohmschen Widerstandserwärmung erfolgt dann eine signifikante Erwärmung der Blechfolien des ersten Wabenkörpers, wobei die damit in Kontakt befindliche katalytische Beschichtung des ersten Wabenkörpers und/oder das den ersten Wabenkörper durchströmende Abgas erhitzt wird. Aus Stabilitätsgründen ist zudem vorgesehen, dass dieser erste Wabenkörper mittels Stiften und Halteelementen gegen einen nachfolgend angeordneten zweiten Wabenkörper abgestützt ist. Eine solche Ausgestaltung eines elektrisch beheizbaren Katalysators hat sich bereits sehr bewährt, verlangt aber noch immer einen relativ hohen Aufwand bei der Herstellung.

Darüber hinaus ist aus der WO-A1-2013064373 eine Abgasnachbehandlungsvorrichtung bekannt, bei der ein Wabenkörper vorgesehen ist, an dessen Auslassseite eine Aufnahme für ein Heizelement vorgesehen ist. Dieses Heizelement ist insbesondere durch einen elektrischen Leiter gebildet, der von einem Isolator umgeben ist. Dieses Heizelement ist in der Aufnahme ausgebildet und mit mindestens einer Blechlage des Wabenkörpers verbunden, so dass das Heizelement unverlierbar in dem Wabenkörper befestigt ist. Eine solche Ausgestaltung der Abgasbehandlungsvorrichtung führt dazu, dass diese einfach herzustellen und elektrisch beheizbar ist. Dabei kann das Heizelement während des Herstellungsprozesses der Abgasnachbehandlungsvorrichtung integriert werden, es ist aber auch möglich, das Heizelement nach Herstellung des Wabenkörpers in diesen zu integrieren. Dieses Konzept führt jedoch dazu, dass eine gezielte Bearbeitung der Blechlagen des Wabenkörpers erforderlich ist, und dass das Abgas erst kurz vor dem Austritt aus dem Wabenkörper durch Kontakt mit dem Heizelement erwärmt wird.

Die US 4 548 625 A offenbart eine Abgasreinigungsvorrichtung für Dieselmotoren. Die Vorrichtung enthält eine Falle für Partikel, die im Abgas enthalten sind. Durch einen in der Falle befindlichen Filter können Rußpartikel und andere Partikel, die im Abgas enthalten sind, aus dem Abgas herausgefiltert werden. Die Vorrichtung weist weiterhin eine Mehrzahl von elektrischen Heizdrähten auf, die über das stromauf liegende Ende des Filters derart verteilt sind, dass das Abgas die elektrischen Heizdrähte umströmt. Die elektrischen Heizdrähte sind dabei von isolierenden Armen gehalten, um einen vorgegebenen kleinen Abstand zwischen den elektrischen Heizdrähten und dem Filter sicherzustellen.

Die DE 10 2013 222 490 A1 offenbart ein Abgasnachbehandlungssystem für Verbrennungsmotoren. Das System umfasst eine Abgasleitung, eine Partikelfiltervorrichtung, eine Kohlenwasserstoffquelle und ein elektronisches Steuermodul. Der Partikelfilter dient zur Entfernung von Partikeln aus dem Abgas. Das Steuermodul ist derart ausgelegt, dass es ein Regenerationssignal empfängt, welches die Partikelmenge angibt, die in der Partikelfiltervorrichtung abgefangen ist. Darüber hinaus kann das Steuermodul den Verbrennungsmotor überwachen und aus der Überwachung eine Mehrzahl von Betriebsparametern des Verbrennungsmotors bestimmen.

In Kraftfahrzeugen steht regelmäßig nur zu bestimmten Zeitpunkten eine vorgegebene Energie bzw. Spannung zur Verfügung. So konnten zuvor solche elektrischen Heizelemente vielfach nur mit einer Spannung von 12 Volt oder maximal 24 Volt betrieben werden. Nunmehr besteht jedoch die Möglichkeit, dass Bordnetze eine Spannung bis 48 Volt zur Verfügung stellen können. Um hier eine ausreichende ohmsche Widerstandserwärmung zu erreichen, muss das elektrische Heizelement einen relativ hohen elektrischen Widerstand ausbilden. Bevorzugt sind hierbei Ausgestaltungen der Heizelemente, die einen elektrischen Widerstand im Bereich von 0,5 bis 5 Ohm bereitstellen. Die Anwendung bzw. der Einsatz von Energiesystemen bzw. Bordnetzen mit 48 Volt stellt neue Herausforderungen an die Ausgestaltung der elektrischen Heizelemente sowie deren Integration in Abgasnachbehandlungsanlagen. Dies betrifft einerseits den Betrieb bzw. die Anordnung solcher elektrischen Heizelemente in die Abgasnachbehandlungsanlage, als auch die Fertigung von entsprechenden Wabenkörperanordnungen, die im Hinblick auf die Kosten und die Montage einfach ausgeführt sein sollen.

Problematisch im Zusammenhang mit dem Einsatz von Heizelementen mit hoher Spannung (z. B. 24 Volt oder insbesondere bei 48 V) hat sich die Korrosion herausgestellt. So wurde beispielsweise herausgefunden, dass der Korrosionsabtrag der Materialien für den Heizleiter (z. B. die Metallfolien eines elektrisch beheizbaren Wabenkörpers) mit steigender Spannung zunimmt. So konnte ermittelt werden, dass dieser Korrosionsabtrag von einer Reihe von Materialien beim Betrieb mit einem 48-Volt-Netz gegenüber einem klassischen 12-Volt-Netz um einen signifikanten Faktor F ansteigt, wobei F mindestens 3, mindestens 5 oder sogar mindestens 8 (ermittelt in korrosiver Umgebung, nämlich bei einer NaCl-Benetzung) beträgt. Folglich besteht im Hinblick auf einen dauerhaften Betrieb solcher Heizelemente in dieser Umgebung ein erheblicher Anpassungsbedarf.

Hiervon ausgehend ist es Aufgabe der vorliegenden Erfindung, die mit Bezug auf den Stand der Technik geschilderten Probleme zumindest teilweise zu lösen. Insbesondere soll eine Wabenkörperanordnung angegeben werden, mit der einerseits ein gezieltes Temperaturmanagement hinsichtlich der Abgasnachbehandlungsanlage erreicht werden kann, die gleichzeitig aber auch besonders effektiv und im Umfeld eines 48-Volt-Bordnetzes arbeitet. Zudem soll die Wabenkörperanordnung unter verschiedensten Umgebungsbedingungen in der Abgasnachbehandlungsanlage einen kontrollierten Stromfluss bzw. ein gewünschtes Temperaturprofil ermöglichen, insbesondere unter Berücksichtigung der thermischen Ausdehnungsverhalten aufgrund von Temperaturschwankungen und/oder Druckimpulsen in der Abgasnachbehandlungsanlage. Weiter steht im Fokus, eine Wabenkörperanordnung vorzuschlagen, die eine verhältnismäßig einfache Montage ermöglicht. Darüber hinaus soll die Wabenkörperanordnung einen relativ geringen Druckverlust ausbilden, wenn diese Wabenkörperanordnung mit elektrischer Heizvorrichtung von einem Abgasstrom durchströmt wird. Außerdem ist erstrebenswert, dass der Einflussbereich der elektrischen Heizung nicht nur auf den Abgasstrom, sondern auch auf den Wabenkörper mit der katalytisch aktiven Beschichtung übertragbar ist.

Diese Aufgaben werden gelöst mit einer Wabenkörperanordnung mit elektrischer Heizvorrichtung gemäß den Merkmalen des Patentanspruchs 1. Weitere vorteilhafte Ausgestaltungen der Erfindung sind in den abhängigen Patentansprüchen aufgeführt. Es ist darauf hinzuweisen, dass die in den Patentansprüchen einzeln aufgeführten Merkmale in beliebiger, technologisch sinnvoller Weise miteinander kombiniert werden können und weitere Ausgestaltungen der Erfindung aufzeigen. Die Beschreibung, insbesondere auch im Zusammenhang mit den Figuren, veranschaulicht diese Merkmale und gibt weitere Kombinationsmöglichkeiten an, die ebenfalls Ausführungsvarianten der Erfindung darstellen.

Bei der hier vorgeschlagenen Wabenkörperanordnung mit einer elektrischen Heizvorrichtung ist vorgesehen, dass die elektrische Heizeinrichtung mindestens einen elektrisch isolierten Heizdraht mit einem Drahtdurchmesser umfasst. Dieser Heizdraht ist mittels einer Stiftanordnung an einer Stirnseite eines Wabenkörpers mit einem Abstand von mindestens dem Fünffachen und maximal dem Fünfzehnfachen des Drahtdurchmessers fixiert.

Bezüglich der elektrischen Heizeinrichtung ist anzumerken, dass diese insbesondere so ausgestaltet und eingerichtet ist, dass diese mit einem 48-Volt-Netz betreibbar ist. Die Heizeinrichtung kann einen oder mehrere Heizdrähte umfassen, die elektrisch in Reihe und/oder parallel zueinander verschaltet sein können. Der mindestens eine Heizdraht weist insbesondere einen elektrisch leitfähigen Drahtkern auf, der mit einer Spannungsquelle einerseits und mit einer elektrischen Masse andererseits kontaktiert ist. Darüber hinaus ist dieser Drahtkern nach außen (vollständig) elektrisch isoliert, so dass insbesondere eine direkte elektrische Kontaktierung hin zu anderen Bereichen als den Anschlusselektroden, insbesondere ein angrenzendes Gehäuse der Wabenkörperanordnung, die Stiftanordnung und/oder den Wabenkörper, unterbunden ist. Für den Drahtkern bietet sich ein Material umfassend Nickel und Chrom an. Die den Drahtkern umgebende Drahtisolierung kann zum Beispiel aus pulverförmigem, hochverdichtetem Mineraloxid, beispielsweise Aluminiumoxid oder Magnesiumoxid, gebildet sein. Der Heizdraht ist demnach bevorzugt nach Art eines sogenannten Koaxialkabels ausgeführt, mit innenliegendem elektrisch leitfähigem Drahtkern und außen umgebender Drahtisolierung. Gerade diese Drahtisolierung dient auch dazu, den eingangs beschriebenen Korrosionsabtrag deutlich zu minimieren. Zudem kann es hilfreich sein, dass der Heizdraht zusätzlich mit einem Drahtmantel ausgeführt ist, der wiederum aus Metall ist. Eine solche Ausgestaltung des Heizdrahts führt dazu, dass die aufgrund der ohmschen Widerstandserwärmung im Drahtkern entstehende Hitze schnell und umfassend auf den metallischen Drahtmantel abgegeben werden kann, wobei, ausgehend von dort durch eine direkte Kontaktierung des Abgases und/oder der Stiftanordnung, eine Wärmeleitung effektiv erfolgen kann. Im Hinblick auf das Einsatzgebiet der Wabenkörperanordnung ist ein hochtemperaturfester und korrosionsbeständiger Drahtmantel bevorzugt, beispielsweise ein Stahl (wie Inconel® 600).

Der Drahtkern wird in vielen Anwendungen einen über die Länge gleichmäßig ausgeprägten Drahtkernquerschnitt aufweisen. Es ist jedoch möglich, dass der Drahtkernquerschnitt über die Länge variiert, beispielsweise verkleinert wird, um in vorbestimmten Abschnitten eine vorbestimmte erhöhte Heizleistung zu realisieren.

Der Heizdraht hat auch einen (durch die Außenwandung definierten) Drahtdurchmesser, mit dem im Wesentlichen die räumliche Ausdehnung des Heizdrahts selbst charakterisiert werden kann.

Intensive Untersuchungen haben gezeigt, dass der Einsatz eines solchen elektrisch isolierten Heizdrahts stromaufwärts eines Wabenkörpers, gerade im Verbund mit einem 48-Volt-Netz, sehr gute Möglichkeiten für ein gezieltes Temperaturmanagement realisiert, wenn eine entsprechende Heizvorrichtung beabstandet zu dem Wabenkörper positioniert ist, in dem dann eine (katalytische) Umsetzung von Schadstoffen bei einer vorgegebenen bzw. bekannten bzw. eingestellten Mindesttemperatur erfolgt. Auch im Hinblick auf die weiter oben aufgeführten Ziele wurde herausgefunden, dass diese elektrische Heizeinrichtung dann mittels einer Stiftanordnung an einer Stirnseite des Wabenkörpers mit dem vordefinierten Abstand von mindestens dem Fünffachen und maximal dem Fünfzehnfachen des (mittleren) Drahtdurchmessers zu positionieren ist. Mit anderen Worten bedeutet das, dass das Abgas zunächst die elektrische Heizeinrichtung mit dem mindestens einen elektrisch isolierten Heizdraht durchströmt und sich danach (nur) entlang der Stiftanordnung weiter bewegt, bevor es schließlich in den Wabenkörper eindringt. Insbesondere wurde herausgefunden, dass bei Unterschreitung des hier vorgeschlagenen Abstandes vom Fünffachen des Drahtdurchmessers ein ungünstiges Einströmverhalten des Abgases an der Stirnseite des Wabenkörpers erfolgt. Zudem können sich dort anlagernde Rußbrücken abbrennen und langfristig zu einer Beschädigung der Wabenkörperanordnung führen. Wird der Abstand dahingehend vergrößert, dass das Fünfzehnfache des Drahtdurchmessers überschritten wird, kann die Wabenkörperanordnung zu unerwünschtem Schwingen und/oder Vibrieren neigen, wodurch ebenfalls die Dauerhaltbarkeit der Wabenkörperanordnung gefährdet ist. Der hier angegebene Bereich des Abstandes vom Fünffachen bis zum Fünfzehnfachen des Drahtdurchmessers erlaubt zudem eine ausreichende Relativbewegung zwischen der Heizeinrichtung und dem Wabenkörper in Folge der wechselnden Umgebungsbedingungen in einer Abgasnachbehandlungsanlage. Ganz besonders und bevorzugt ist, dass dieser Abstand im Bereich vom Achtfachen bis Dreizehnfachen des Drahtdurchmessers gewählt wird.

Die Stiftanordnung umfasst insbesondere eine Vielzahl von separaten Stiften, die den mindestens einen elektrisch isolierten Heizdraht in dem vorgegebenen Abstand fixieren und selbst zudem (nur noch) mit dem nachgelagerten Wabenkörper im Kontakt sind bzw. dort befestigt sind. Die Stiftanordnung ist zudem insbesondere so ausgestaltet, dass diese eine Wärmeleitung von der Heizeinrichtung bzw. dem Heizdraht hin zum Wabenkörper ermöglichen. Die Stiftanordnung bzw. die Stifte sind demnach zumindest teilweise mit wärmeleitendem Material ausgefüllt, insbesondere im Kontaktbereich der Stiftanordnung mit dem Heizdraht.

Besonders bevorzugt ist, dass die elektrische Heizeinrichtung einen einzelnen Heizdraht umfasst, der so angeordnet ist, dass dieser eine Heizscheibe bildet, die mit gleichem Abstand zur Stirnseite des Wabenkörpers fixiert ist. In diesem Fall kann der einzelne Heizdraht mäanderförmig, spiralförmig oder dergleichen und/oder im Wesentlichen in einer Ebene bevorzugt gleichmäßig verteilt angeordnet sein. Dabei überdeckt der einzelne Heizdraht einen Teilbereich und/oder die Gesamtheit der Stirnfläche des nachfolgenden Wabenkörpers und bildet so eine Art Scheibe aus. Klar ist, dass der Heizdraht bevorzugt so verlegt ist, dass noch ausreichend Zwischenräume zwischen den Heizdrahtschleifen existieren, durch die das Abgas hindurchdringen kann. Bevorzugt ist, dass bezüglich der gewünschten überdeckten Fläche der Stirnseite des Wabenkörpers zwischen 20 % und 60 % durch den elektrischen Heizdraht bedeckt ist. Die Zwischenräume bzw. der Überdeckungsgrad ist unter Berücksichtigung des maximal erlaubten bzw. gewünschten Druckabfalls der Wabenkörperanordnung zu wählen, was für den Fachmann auf diesem Gebiet kein Problem darstellt. Auch wenn es grundsätzlich möglich ist, die Heizscheibe schräg zur Stirnseite des Wabenkörpers zu fixieren, so dass der oben genannte Abstand jedenfalls auch an der Engstelle realisiert ist, so ist doch bevorzugt, dass eine im Wesentlichen parallele Anordnung der Heizscheibe mit Bezug zur Stirnseite des Wabenkörpers realisiert ist. Ist beispielsweise auch die Stirnseite des Wabenkörpers schräg zur Strömungsrichtung des Abgases positioniert, dann ist ebenfalls bevorzugt, dass die Heizscheibe gleichermaßen schräg zur Strömungsrichtung des Abgases mit gleichbleibendem Abstand über die gesamte Stirnseite ausgerichtet ist. Grundsätzlich ist auch möglich, dass mehrere Heizscheiben, die jeweils von einem einzelnen Heizdraht gebildet werden, in Strömungsrichtung des Abgases hintereinander angeordnet und mit einer (insbesondere einzelnen) Stiftanordnung mit gleichbleibendem Abstand jeweils zur Stirnseite des Wabenkörpers fixiert sind.

Außerdem wird vorgeschlagen, dass die Stiftanordnung eine Vielzahl von separaten Stiften umfasst, die sich in von der Stirnseite des Wabenkörpers ausgehende Hohlräume erstrecken und dort befestigt sind. Ganz besonders bevorzugt ist, dass die Stiftanordnung ausschließlich aus einer Vielzahl von separaten Stiften gebildet ist. Der hier verwendete Begriff "Stift" ist breit zu interpretieren und soll im Wesentlichen zum Ausdruck bringen, dass ein längliches Element vorliegt, welches den eingangs genannten Abstand überspannt und dementsprechend gegenüberliegende Endbereiche hat, die einerseits mit dem Heizdraht und andererseits mit den Hohlräumen des Wabenkörpers zusammenwirken können. Die konkrete Ausgestaltung der Endbereiche der Stifte kann anwendungsorientiert ausgeprägt sein, beispielsweise in Zylinderform, in Kegelform, mit einem Haken, mit einer Öse, mit einem Anschlag, mit einer Fase und dergleichen. Grundsätzlich ist nicht erforderlich, dass jeder Stift in Hohlräume des Wabenkörpers eindringt. Beispielsweise ist es möglich, dass bei einer Ausgestaltung des Wabenkörpers als Partikelfilter mit wechselseitig verschlossenen Kanälen (Stopfen), sich ein Teil der Stifte in die Kanäle hinein erstreckt und ein anderer Teil in die Stopfen und/oder Kanalwand hinein. Die Hohlräume können beispielsweise auch nach Art von durchgehenden und/oder nachfolgend verschlossenen Kanälen, Falten, Taschen, etc. gebildet sein. Die Befestigung der Stifte in den Hohlräumen erfolgt insbesondere mittels Stoffschluss (Material-Material-Verbindung), insbesondere durch eine Hartlötanbindung, eine Sinteranbindung, einer Diffusionsanbindung, einer Schweißanbindung oder dergleichen. Die Anzahl der Stifte ist wiederum unter Berücksichtigung der konkreten Ausgestaltung der Heizeinrichtung, des Wabenkörpers und/oder der Abgasnachbehandlungsanlage zu wählen. Regelmäßig wird die Anzahl der Stifte mindestens zehn betragen, insbesondere mindestens zwanzig oder mindestens dreißig.

Ganz besonders bevorzugt ist, dass die Stiftanordnung metallisch ist. Dies kann einerseits meinen, dass die Stiftanordnung metallische Teilbereiche aufweist, bevorzugt ist jedoch, dass die Stiftanordnung (bzw. die separaten Stifte) vollständig (nur) aus Metall sind. Die metallische Ausgestaltung der Stiftanordnung ermöglicht insbesondere eine effiziente Wärmeleitung von der elektrischen Heizeinrichtung bzw. dem Heizdraht hin zum Wabenkörper und/oder das daran entlangströmende Abgas. Dies trifft insbesondere dann zu, wenn der Heizdraht mit einem metallischen Drahtmantel ausgeführt ist. Gerade diese Ausgestaltung ist auch bevorzugt, weil so eine einfache Verbindung zwischen dem Drahtmantel und der Stiftanordnung bzw. dem Stift ermöglicht ist, wiederum bevorzugt mittels Stoffschluss (Material-Material-Verbindung). Auch in diesem Fall ist bezüglich der Stiftanordnung ein Metall zu wählen, welches den hohen Temperaturen und der korrosiven Umgebung in der Abgasnachbehandlungsanlage dauerhaft standhält.

Außerdem wird als vorteilhaft angesehen, dass der mindestens eine Heizdraht einen ovalen Drahtquerschnitt aufweist. Bei einer solchen Ausgestaltung des Heizdrahts wird bei einer Anströmung des Heizdrahts von Abgas ein unterschiedlicher Strömungswiderstand erzeugt, je nachdem, ob die Abgasströmung auf den größeren Drahtdurchmesser oder den kleineren Drahtdurchmesser des ovalen Drahtquerschnitts auftrifft. Insofern ist besonders bevorzugt, dass der Heizdraht so in der Wabenkörperanordnung angeordnet ist, dass ein möglichst geringer Strömungswiderstand erzeugt wird, also der ovale Drahtquerschnitt mit seinem kleinsten Drahtdurchmesser der Strömung entgegensteht. Auf diese Weise kann ein gleichzeitig relativ großflächiger Drahtquerschnitt zur Erzeugung des gewünschten elektrischen Widerstandes bereitgestellt werden, ohne dass die Durchströmung der Heizeinrichtung bzw. der Wabenkörperanordnung übermäßig behindert wird. Ganz besonders bevorzugt ist, dass das Verhältnis von maximalem Durchmesser zu minimalem Durchmesser des ovalen Drahtquerschnitts 5:1 oder größer beträgt. Im Hinblick auf die Formangabe, dass hier ein "ovaler" Drahtquerschnitt vorliegt, wird insbesondere die Herstellung eines solchen Heizdrahts berücksichtigt. Die hier angegebenen Durchmesserverhältnisse lassen sich natürlich gleichermaßen mit anderen Drahtquerschnittsformen realisieren, wie beispielsweise eine Rechteck-Form, usw.

Weiter wird eine Wabenkörperanordnung als vorteilhaft angesehen, bei der die Stiftanordnung eine Vielzahl von Stiftdurchgängen aufweist, durch die der mindestens eine Heizdraht hindurchgeführt ist. Insbesondere ist in diesem Fall zumindest ein Anteil oder sogar die Gesamtheit der Stifte mit Stiftdurchgängen (z. B. nach Art einer Öse, einer Schlaufe, einer Bohrung, etc.) ausgeführt, so dass der Heizdraht dort hindurchgeführt werden kann. Zudem ist bevorzugt, dass nicht nur eine reine Führung des Heizdrahts in den Stiftdurchgängen erfolgt, sondern dass dort gleichzeitig eine dauerhafte Verbindung zwischen der Stiftanordnung und dem Heizdraht realisiert ist.

Die elektrische Heizvorrichtung kann grundsätzlich zwei gegenüberliegende Elektroden aufweisen. Dies bietet den Vorteil, dass die gegenüberliegenden Elektroden gleichermaßen eine stabile Anordnung der elektrischen Heizvorrichtung bzw. des Heizdrahts unterstützen. Außerdem kann ein gerichteter Stromfluss generiert werden.

Für die Wabenkörperanordnung kann ein gemeinsames Gehäuse vorgesehen sein, in dem die elektrische Heizvorrichtung und der Wabenkörper angeordnet sind. Insbesondere kann über das gemeinsame Gehäuse und gegebenenfalls die daran befestigten (gegenüberliegenden) Elektroden eine stabile und geschützte Wabenkörperanordnung mit einer solchen elektrischen Heizvorrichtung realisiert sein. Die Stiftanordnung dient insbesondere auch dazu, eine elektrische Stromführung hin zu dem Gehäuse zu unterbinden.

Grundsätzlich ist auch möglich, eine Mehrzahl von Heizvorrichtungen mit separat regelbaren Stromversorgungseinheiten vorzusehen. Diese Mehrzahl von Heizvorrichtungen kann beispielsweise jeweils ein Segment der Stirnseite des Wabenkörpers überspannen und/oder sich durchdringende Heizschleifen ausbilden, die sich jeweils über die gesamte Stirnfläche des Wabenkörpers erstrecken. Dabei kann die Heizvorrichtung beispielsweise mit unterschiedlichen Heizdrähten ausgeführt sein und/oder mit unterschiedlichen Spannungen bzw. Strömen (zeitgleich und/oder zeitlich nacheinander) betrieben werden. So können insbesondere verschiedene Wärmeleistungen der Heizvorrichtung durch einfaches Zuschalten bzw. Abschalten von Heizvorrichtungen realisiert werden.

Die Erfindung findet insbesondere Anwendung bei einem Kraftfahrzeug mit einer Abgasnachbehandlungsanlage, einer Stromversorgungseinheit, einer Wabenkörperanordnung mit einer elektrischen Heizvorrichtung gemäß der hier vorgeschlagenen Bauart sowie einer Kontrolleinheit, wobei die Kontrolleinheit mit der Stromversorgungseinheit und der Wabenkörperanordnung verbunden ist. Die Kontrolleinheit ist insbesondere dazu eingerichtet, bedarfsgerecht die elektrische Heizvorrichtung mit der Stromversorgungseinheit zu kontaktieren, so dass ein gezielter Stromfluss durch die elektrische Heizvorrichtung erzielbar ist, um bestimmte Temperaturbedingungen in der Abgasnachbehandlungsanlage (dem Abgas und/oder dem Wabenkörper und/oder nachgeordneten Abgasnachbehandlungseinheiten wie katalytische Konverter, Partikelfilter, Absorber, etc.) zu realisieren. Dabei ist ebenfalls vorgesehen, dass zumindest der in der Wabenkörperanordnung integrierte Wabenkörper eine katalytisch aktive Beschichtung (beispielsweise einen Oxidationskatalysator) aufweist.

Der Wabenkörper ist bevorzugt mit mindestens einer metallischen, insbesondere zumindest teilweise strukturierten, Lage gebildet. Die metallische Lage kann insbesondere als Blechlage (z. B. als Folie, ggf. mit Mikrostrukturen, Leitflügeln, Öffnungen, Schlitzen, Wellstruktur, etc.), als Vlies (z. B. mit einer chaotischen Anordnung von Drahtfilamenten) und/oder als Gitter bzw. Gewebe (z. B. ebenfalls aus Drähten) ausgeführt sein. Das Metall ist dabei hochtemperaturfest und korrosionsbeständig und damit geeignet, dauerhaft den Bedingungen in einer Abgasnachbehandlungsanlage zu widerstehen.

Dabei ist insbesondere vorgesehen, dass die Stromversorgungseinheit Bestandteil eines 48-Volt-Netzes ist und entsprechend Strom zur Verfügung stellen kann.

Die Erfindung sowie das technische Umfeld werden nachfolgend anhand der Figuren näher erläutert. Es ist darauf hinzuweisen, dass in den Figuren besonders bevorzugte Ausführungsvarianten dargestellt sind, die die hier beschriebene Erfindung jedoch nicht beschränken sollen. Es zeigen schematisch:
Fig. 1: eine perspektivische Ansicht einer Wabenkörperanordnung,
Fig. 2: perspektivisch eine Ausführungsvariante eines Heizdrahts,
Fig. 3: eine Ausgestaltung einer Stiftanordnung im Detail, und
Fig. 4: ein Kraftfahrzeug mit einer Abgasnachbehandlungsanlage.

In den Figuren werden regelmäßig gleiche Bauteile mit den gleichen Bezugszeichen versehen. Es ist aber darauf hinzuweisen, dass die jeweils aufgezeigten Gestaltungsformen der Bauteile bzw. deren Interaktion miteinander in einer Figur nicht zwingend zusammengehörig aufgefasst werden müssen. Vielmehr ist es möglich, Bauteile und/oder Funktionen aus einer Figur mit Bauteilen und/oder Funktionen mindestens einer anderer Figur zu kombinieren. Ebenso ist auch möglich, Teilaspekte bzw. einzelne Bauteile aus den Figuren zu extrahieren und allein zu betrachten. Etwas anderes soll nur gelten, soweit dies hier nachfolgend explizit zum Ausdruck gebracht wird.

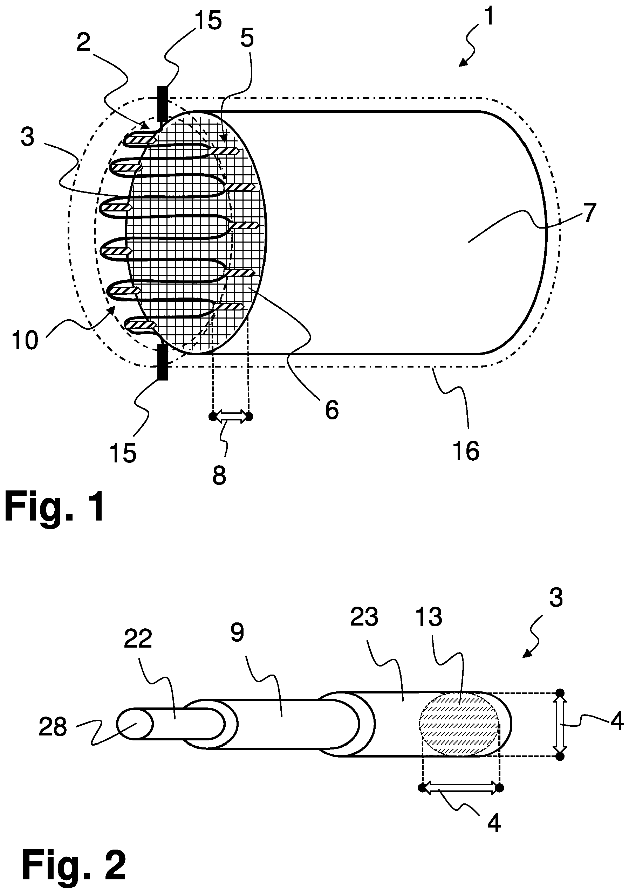

Fig. 1 zeigt eine Wabenkörperanordnung 1 mit einem außen angedeuteten Gehäuse 16, welches üblicherweise auch die für das Abgas durchströmbare Leitung 26 nach außen hin begrenzt. Rechts (bzw. stromabwärts) ist ein Wabenkörper 7 mit seiner Stirnseite 6 dargestellt. Üblicherweise tritt das Abgas über diese Stirnseite 6 in den Wabenkörper 7 ein. Der Wabenkörper 7 kann mit mindestens einer zumindest teilweise strukturierten metallischen Lage, mit einem metallischen Vlies, mit einem Gewebe, mit einem Gitter und/oder aus einem extrudierten Material bereitgestellt werden. Mittels einer Stiftanordnung 5 ist die elektrische Heizvorrichtung 2 in einem vorgegebenen Abstand 8 positioniert und gegen die Stirnseite 6 abgestützt. Die hier gezeigte Heizvorrichtung 2 ist nach Art einer Heizscheibe 10 mit gleichbleibendem Abstand 8 über die gesamte Stirnseite 6 des Wabenkörpers 7 ausgebildet. Im hier gezeigten Fall ist die Heizvorrichtung 2 mit einem einzelnen Heizdraht 3 ausgestattet, der mäanderförmig die Stirnseite 6 des Wabenkörpers 7 (vollständig) überspannt. Dabei sind gegenüberliegend zwei Elektroden 15 vorgesehen, die Strom (elektrisch isoliert) durch das Gehäuse 16 hindurch zu- und abführen können. Über diese Elektroden 15 ist der Heizdraht 3 beispielsweise mit einer hier nicht dargestellten Stromversorgungseinheit bzw. der elektrischen Masse verbunden.

Fig. 2 zeigt eine bevorzugte Variante eines Heizdrahtes 3, der nach Art eines Koaxialkabels ausgeführt ist. In der Mitte bzw. zentral ist dabei der elektrisch leitende Drahtkern 22 vorgesehen, der einen Drahtkernquerschnitt 28 ausbildet. Diesen Drahtkern 22 koaxial nach Art eines Hohlzylinders umgebend ist die Drahtisolierung 9 vorgesehen. Wiederum koaxial darüber und vollständig umschließend ist ein metallischer Drahtmantel 23 vorgesehen. Dieser Aufbau ist bevorzugt vollständig zwischen den beiden Elektroden der Heizvorrichtung realisiert. Ebenfalls geht aus Fig. 2 hervor, dass der (äußere) Drahtquerschnitt oval ausgeführt ist und insofern einen maximalen und minimalen Drahtdurchmesser 4 ausbildet.

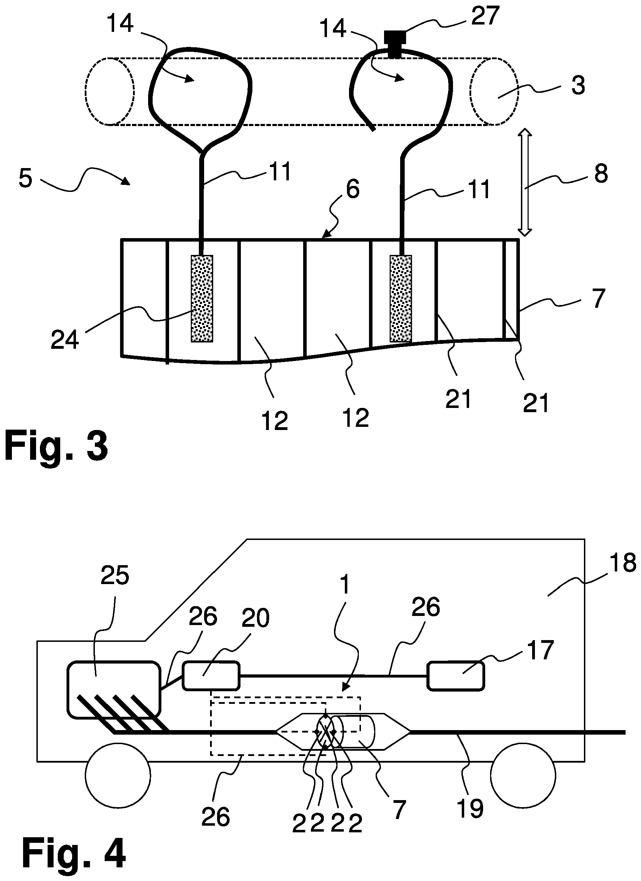

Fig. 3 zeigt ein Detail einer Ausführungsvariante einer Stiftanordnung 5, wobei hier beispielhaft zwei unterschiedliche Stifte 11 veranschaulicht sind, was bei einer Stiftanordnung 5 jedoch nicht zwingend erforderlich ist. Die Stifte 11 sind mit dem hier unten dargestellten Endbereich so positioniert, dass diese in den Wabenkörper 7, nämlich in von der Stirnseite 6 ausgehende Hohlräume 12 hineinragend, befestigt sind. Hierzu dient insbesondere eine Anbindung 24, beispielsweise mittels eines Hartlotes, insbesondere wenn die Stifte 11 und der Wabenkörper 7 in dem Bereich metallisch ausgeführt sind. Damit nunmehr der hier angedeutete Heizdraht 3 in dem vorgegebenen Abstand 8 dauerhaft zur Stirnseite 6 des Wabenkörpers 7 fixiert ist, weisen die Stifte 11 Stiftdurchgänge 14 auf, in denen der Heizdraht 3 geführt bzw. gehalten ist. In der linken Ausprägung des Stifts 11 ist der Stiftdurchgang 14 nach Art einer (geschlossenen) Öse vorgesehen, während der rechts dargestellte Stift 11 einen Stiftdurchgang 14 nach Art eines Hakens oder einer Schleife ausbildet, in der der Heizdraht 3 aufgenommen ist. Die Fixierung des Heizdrahts 3 bezüglich der Stifte 11 kann auch durch ein separates Klemmelement 27 (hier z. B. nach Art einer Klemmschraube) erreicht werden. Bevorzugt ist jedoch unter Umständen eine stoffschlüssige Verbindung zwischen dem (metallischen) Stift 11 und dem (außen metallischen) Heizdraht 3.

Nur der Vollständigkeit halber sei darauf hingewiesen, dass hier nicht ein vollständiger Auszug des Wabenkörpers 7 gezeigt ist, sondern nur ein Teilbereich nahe der Stirnseite 6. Die Hohlräume 12 werden hier insbesondere durch Blechlagen 21 gebildet, beispielsweise nach Art von strukturierten und/oder glatten Blechfolien.

Zur Veranschaulichung des Anwendungsgebiets wird in Fig. 4 noch ein Kraftfahrzeug 18 dargestellt, das eine Verbrennungskraftmaschine 25 und eine nachgelagerte Abgasnachbehandlungsanlage 19 umfasst. In dieser Abgasnachbehandlungsanlage 19 ist die hier vorgeschlagene Wabenkörperanordnung 1 mit einer Mehrzahl von elektrischen Heizvorrichtungen 2 integriert, wobei die Heizvorrichtungen wieder gegen einen nachgelagerten Wabenkörper 7 abgestützt werden. Das Kraftfahrzeug 18 weist zudem eine Kontrolleinheit 20 auf, mit der, gegebenenfalls aufgrund von Messwerten und/oder Betriebsweisen der Verbrennungskraftmaschine 25, bedarfsgerecht Strom von einer Stromversorgungseinheit 17 hin zu den mehreren elektrischen Heizvorrichtungen 2 zugeführt werden kann.

Das hier vorgeschlagene Konzept einer Wabenkörperanordnung mit einer elektrischen Heizvorrichtung erlaubt insbesondere eine Integration in ein 48V-Bordnetz eines Kraftfahrzeuges, wonach mit dem mindestens einen Heizdraht ein elektrischer Widerstand im Bereich von 0,5 - 5 Ohm bereitgestellt wird. Gerade im Fall eines koaxial aufgebauten Heizdrahtes mit äußerem metallischem Drahtmantel kann die Stiftanordnung direkt an den Heizdraht angelötet werden, wodurch die Herstellung vereinfacht wird. Außerdem erlaubt dieses Konzept einen Wärmeeintrag über Wärmeleitung hin an den (beschichteten) Wabenkörper, so dass ein schneller Konvertierungsstart ermöglicht ist. Insbesondere lassen sich damit auch besonders kleine Heizleistungen (aufgrund des relativ hohen elektrischen Widerstands) einstellen.

## Patentansprüche

1. Wabenkörperanordnung (1) mit einer elektrischen Heizvorrichtung (2), wobei die elektrische Heizvorrichtung (2) mindestens einen elektrisch isolierten Heizdraht (3) mit einem Drahtdurchmesser (4) umfasst, **dadurch gekennzeichnet, dass** der elektrisch isolierte Heizdraht mittels einer Stiftanordnung (5) an einer Stirnseite (6) eines Wabenkörpers (7) mit einem Abstand (8) von mindestens dem Fünffachen und maximal dem Fünfzehnfachen des Drahtdurchmessers (4) fixiert ist.

2. Wabenkörperanordnung (1) nach Patentanspruch 1, bei der die elektrische Heizvorrichtung (2) einen einzelnen Heizdraht (3) umfasst, der so angeordnet ist, dass dieser eine Heizscheibe (10) bildet, die mit gleichem Abstand (8) zur Stirnseite (6) des Wabenkörpers (7) fixiert ist.

3. Wabenkörperanordnung (1) nach Patentanspruch 1 oder 2, bei der die Stiftanordnung (5) eine Vielzahl von separaten Stiften (11) umfasst, die sich in von der Stirnseite (6) des Wabenkörpers (7) ausgehende Hohlräume (12) erstrecken und dort befestigt sind.

4. Wabenkörperanordnung (1) nach einem der vorhergehenden Patentansprüche, bei der die Stiftanordnung (5) metallisch ist.

5. Wabenkörperanordnung (1) nach einem der vorhergehenden Patentansprüche, bei der der mindestens eine Heizdraht (3) einen ovalen Drahtquerschnitt (13) aufweist.

6. Wabenkörperanordnung (1) nach einem der vorhergehenden Patentansprüche, bei der die Stiftanordnung (5) eine Vielzahl von Stiftdurchgängen (14) aufweist, durch die der mindestens eine Heizdraht (3) hindurch geführt ist.

7. Wabenkörperanordnung (1) nach einem der vorhergehenden Patentansprüche, bei der die elektrische Heizvorrichtung (2) zwei gegenüberliegende Elektroden (15) aufweist.

8. Wabenkörperanordnung (1) nach einem der vorhergehenden Patentansprüche, bei der ein gemeinsames Gehäuse (16) vorgesehen ist, in dem die elektrische Heizvorrichtung (2) und der Wabenkörper (7) angeordnet sind.

9. Wabenkörperanordnung (1) nach einem der vorhergehenden Patentansprüche, bei der eine Mehrzahl von Heizvorrichtungen (2) mit separat regelbaren Stromversorgungseinheiten (17) vorgesehen ist.

10. Kraftfahrzeug (18) mit einer Abgasnachbehandlungsanlage (19), einer Stromversorgungseinheit (17), einer Wabenkörperanordnung (1) mit einer elektrischen Heizvorrichtung (2) gemäß einem der vorhergehenden Patentansprüche sowie einer Kontrolleinheit (20), wobei die Kontrolleinheit (20) mit der Stromversorgungseinheit (17) und der Wabenkörperanordnung (1) verbunden ist.

## Claims

1. Honeycomb body arrangement (1) having an electric heating device (2), wherein the electric heating device (2) comprises at least one electrically insulated heating wire (3) having a wire diameter (4), **characterized in that** the electrically insulated heating wire is fixed by means of a pin arrangement (5) to a front side (6) of a honeycomb body (7) at a distance (8) of at least five times and a maximum of fifteen times the wire diameter (4).

2. Honeycomb body arrangement (1) according to Patent Claim 1, in which the electric heating device (2) comprises a single heating wire (3), which is arranged in such a way that it forms a heating disk (10), which is fixed at a uniform distance (8) from the front side (6) of the honeycomb body (7).

3. Honeycomb body arrangement (1) according to Patent Claim 1 or 2, in which the pin arrangement (5) comprises a multiplicity of separate pins (11), which extend into cavities (12) starting from the front side (6) of the honeycomb body (7) and are secured there.

4. Honeycomb body arrangement (1) according to one of the preceding patent claims, in which the pin arrangement (5) is metallic.

5. Honeycomb body arrangement (1) according to one of the preceding patent claims, in which the at least one heating wire (3) has an oval wire cross section (13).

6. Honeycomb body arrangement (1) according to one of the preceding patent claims, in which the pin arrangement (5) has a multiplicity of pin passages (14), through which the at least one heating wire (3) is passed.

7. The honeycomb body arrangement (1) according to one of the preceding patent claims, in which the electric heating device (2) has two opposite electrodes (15).

8. Honeycomb body arrangement (1) according to one of the preceding patent claims, in which a common housing (16) is provided, in which the electric heating device (2) and the honeycomb body (7) are arranged.

9. Honeycomb body arrangement (1) according to one of the preceding patent claims, in which a plurality of heating devices (2) having separately controllable power supply units (17) is provided.

10. Motor vehicle (18) having an exhaust gas aftertreatment system (19), a power supply unit (17), a honeycomb body arrangement (1) having an electric heating device (2) according to one of the preceding patent claims and a control unit (20), wherein the control unit (20) is connected to the power supply unit (17) and to the honeycomb body arrangement (1).

## Revendications

1. Arrangement de corps alvéolaires (1) comprenant un dispositif chauffant électrique (2), le dispositif chauffant électrique (2) comportant au moins un fil chauffant (3) isolé électriquement ayant un diamètre de fil (4), **caractérisé en ce que** le fil chauffant isolé électriquement est fixé au moyen d'un arrangement de broches (5) à un côté frontal (6) d'un corps alvéolaire (7) à un écart (8) égal à au moins le quintuple et au maximum quinze fois le diamètre de fil (4).

2. Arrangement de corps alvéolaires (1) selon la revendication 1, dans lequel le dispositif chauffant électrique (2) comporte un fil chauffant (3) unique qui est disposé de telle sorte qu'il forme un disque chauffant (10) qui est fixé à un écart (8) identique par rapport au côté frontal (6) du corps alvéolaire (7).

3. Arrangement de corps alvéolaires (1) selon la revendication 1 ou 2, dans lequel l'arrangement de broches (5) comporte une pluralité de broches (11) séparées qui s'étendent dans des espaces creux (12) émanant du côté frontal (6) du corps alvéolaire (7) et y sont fixées.

4. Arrangement de corps alvéolaires (1) selon l'une des revendications précédentes, dans lequel l'arrangement de broches (5) est métallique.

5. Arrangement de corps alvéolaires (1) selon l'une des revendications précédentes, dans lequel l'au moins un fil chauffant (3) présente une section transversale de fil (13) ovale.

6. Arrangement de corps alvéolaires (1) selon l'une des revendications précédentes, dans lequel l'arrangement de broches (5) possède une pluralité de traversées de broche (14) à travers lesquelles passe l'au moins un fil chauffant (3).

7. Arrangement de corps alvéolaires (1) selon l'une des revendications précédentes, dans lequel le dispositif chauffant électrique (2) possède deux électrodes (15) opposées.

8. Arrangement de corps alvéolaires (1) selon l'une des revendications précédentes, dans lequel il existe un boîtier (16) commun dans lequel sont disposés le dispositif chauffant électrique (2) et le corps alvéolaire (7).

9. Arrangement de corps alvéolaires (1) selon l'une des revendications précédentes, dans lequel il existe une pluralité de dispositifs chauffants (2) munis d'unités d'alimentation électrique (17) régulables séparément.

10. Véhicule automobile (18) équipé d'un système de post-traitement des gaz d'échappement (19), d'une unité d'alimentation électrique (17), d'un arrangement de corps alvéolaires (1) comprenant un dispositif chauffant électrique (2) selon l'une des revendications précédentes ainsi que d'une unité de contrôle (20), l'unité de contrôle (20) étant reliée à l'unité d'alimentation électrique (17) et à l'arrangement de corps alvéolaires (1).
